# EUROPEAN PATENT APPLICATION

(11) **EP 4 741 069 A1**
(43) Date of publication of application: **13.05.2026**
(21) Application number: 25215125.3
(22) Date of filing: 12.11.2025
(51) Int. Cl.: B05C 5/02, B05C 9/06, H01M 4/04

(54) **SLOT DIE FOR MANUFACTURING SECONDARY BATTERY ELECTRODE**

(30) Priority: 12.11.2024 KR 20240160210
(71) Applicant: SAMSUNG SDI CO., LTD., Yongin-si, Gyeonggi-do 17084 (KR)
(72) Inventor: LEE, Seung Hak, 16678 Suwon-si, Gyeonggi-do (KR); JUNG, Rae Joon, 16678 Suwon-si, Gyeonggi-do (KR); LEE, Seung Yeon, 16678 Suwon-si, Gyeonggi-do (KR); SEO, Won Sub, 16678 Suwon-si, Gyeonggi-do (KR); PYO, Young Hak, 16678 Suwon-si, Gyeonggi-do (KR)
(74) Representative: Gulde & Partner

(57) **Abstract**

A slot die for manufacturing a secondary battery electrode includes an upper die, a lower die below the upper die, a shim plate between the upper die and the lower die, and a supplier in the lower die and configured to supply a slurry to a space defined in the shim plate.

## Description

### BACKGROUND

### 1. Field

Aspects of embodiments of the present disclosure relate to a slot die for manufacturing a secondary battery electrode.

### 2. Description of the Related Art

The demand for portable electronic products, such as laptop computers, video cameras, and mobile phones is increasing rapidly, and robots, electric vehicles, and the like are being commercialized. Thus, research on high-performance secondary batteries capable of being repeatedly charged and discharged is being actively conducted. In particular, lithium secondary batteries have a high energy density and a low operating voltage, have excellent storage and lifetime characteristics, and thus are widely used as energy sources for various electronic products.

Unlike primary batteries, the secondary batteries are batteries that are repeatedly charged and discharged. Small-capacity secondary batteries may be used in small portable electronic devices, such as mobile phones, laptop computers, and camcorders. High-capacity and high-density secondary batteries may be used for motor driving power of hybrid vehicles and electric vehicles or energy storage.

The secondary battery includes an electrode assembly for charging and discharging a current, a case for accommodating the electrode assembly and an electrolyte, a cap plate coupled to an opening of the case, and electrode terminals connected to the electrode assembly and protruding outward from the cap plate.

In the electrode assembly, electrodes may be arranged on both, or opposite, sides of a separator, which is an electrical insulating material, and a structure in which the separator and the electrodes are wound, stacked, or mixed may be formed. The separator may continuously maintain ion conductivity while isolating the electrodes having different polarities in the electrode assembly, thereby charging and discharging the electrode assembly.

The electrode is formed by coating a substrate with an active material slurry. A slot die is used for manufacturing the electrode by coating the substrate with the active material slurry. The slot die forms a chamber for supplying the active material slurry and includes a lower block (e. g., a lower die) and an upper block (e. g., an upper die) that set a height of a slot for discharging the active material slurry and a shim member that is installed therebetween to set a width of the slot.

The above-described information disclosed in the technology that forms the background of the present disclosure is provided to improve understanding of the background of the present disclosure, and thus may include information that does not constitute the related art.

### SUMMARY

According to an aspect of one or more embodiments of the present disclosure, a slot die for manufacturing a secondary battery electrode that is capable of satisfying a mixture coating quality and also performing coating with an insulating layer is provided. According to another aspect of one or more embodiments of the present disclosure, a slot die for manufacturing a secondary battery electrode capable of preventing or substantially preventing slurry from leaking by the weight thereof is provided.

The above and other aspects and features of the present disclosure will be described in or will be apparent from the following description of some embodiments of the present disclosure.

According to one or more embodiments, a slot die for manufacturing a secondary battery electrode includes an upper die, a lower die below the upper die, a shim plate between the upper die and the lower die, and a supplier in the lower die and configured to supply a slurry to a space defined in the shim plate.

The lower die may include a lower coupling part on which the shim plate is seated and which is coupled to the upper die, and a lower support part extending downward from the lower coupling part and having a smaller width than the lower coupling part, and the supplier coupled to the lower coupling part may be arranged on each of two sides of the lower support part.

The lower coupling part may include a lower coupling body to which the supplier is coupled, and a lower coupling passage passing through the lower coupling body.

The shim plate may include a seating plate seated on the lower die, and a discharge passage in the seating plate and communicating with the supplier to discharge the slurry.

The discharge passage may include a first discharge passage in the seating plate and communicating with a passage formed in the lower die and a second discharge passage having a length in a first direction in the seating plate and communicating with the first discharge passage.

The supplier may include a supply coupling part coupled to the lower die, a supply extension part extending in an elbow shape from the supply coupling part, and a supply line part that is connected to the supply extension part and configured to supply the slurry.

The supply line part may include a line storage portion configured to store the slurry, a line hose portion that is connected to the line storage portion and configured to guide the slurry, and a line connection portion in the line hose portion and coupled to the supply extension part.

The line hose portion may include a soft material that is deformable.

The supplier may further include a supply sealing part arranged in the supply coupling part and in contact (e.g., close contact) with the lower coupling part.

The supply sealing part may be an O-ring.

The lower die may include a lower body on which the shim plate is seated and which is coupled to the upper die, a lower passage that is formed in the lower body and configured to guide the slurry, and a lower providing part mounted on the lower body and configured to provide the slurry to the lower passage.

The lower passage may include a first passage hole-processed in the lower body in a first direction, and a second passage that communicates with the first passage, is hole-processed in a second direction, and configured to guide the slurry to the shim plate.

The first passage may be exposed through a rear surface of the lower body, and the lower providing part may be assembled with the rear surface of the lower body.

The shim plate may include a seating plate seated on the lower die and a discharge passage that is located in the seating plate, communicates with the lower passage, and configured to discharge the slurry.

The discharge passage may include a first discharge passage in the seating plate and communicating with the lower passage, and a second discharge passage having a length in a first direction in the seating plate and communicating with the first discharge passage.

The lower die may include a lower body on which the shim plate is seated and which is coupled to the upper die, a lower passage that is located in the lower body and configured to guide the slurry, and a lower providing part mounted on the lower body and configured to provide the slurry to the lower passage.

The lower passage may include a third passage formed by hole-processing the lower body in a second direction and configured to guide the slurry to the shim plate. The lower passage may include a third passage hole-processed in the lower body in a second direction and configured to guide the slurry to the shim plate.

The third passage may be exposed through a bottom surface of the lower body, and the lower providing part may be assembled with the bottom surface of the lower body.

The shim plate may include a seating plate seated on the lower die and a discharge passage that is located in the seating plate, communicates with the lower passage, and configured to discharge the slurry.

The discharge passage may include a first discharge passage formed in the seating plate and communicating with the lower passage and a second discharge passage having a length in a first direction in the seating plate and communicating with the first discharge passage.

The lower die may include a lower body on which the shim plate is seated and which is coupled to the upper die, a lower passage in the lower body and configured to guide the slurry, and a lower providing part mounted on the lower body and configured to provide the slurry to the lower passage.

The lower passage may include a first passage hole-processed in the lower body in a first direction, a second passage that communicates with the first passage, is hole-processed in a second direction, and configured to guide the slurry to the shim plate, and a third passage communicating with the second passage and hole-processed from a bottom surface of the lower body in the second direction.

### BRIEF DESCRIPTION OF THE DRAWINGS

The above aspects and other objects, features, and advantages of the present disclosure will become more apparent to those of ordinary skill in the art by describing some embodiments thereof in further detail with reference to the accompanying drawings, in which:
FIG. 1 is a schematic side view illustrating a slot die for manufacturing a secondary battery electrode according to an embodiment of the present invention;
FIG. 2 is a schematic plan view illustrating the slot die for manufacturing a secondary battery electrode of FIG. 1;
FIG. 3 is a schematic view illustrating a state in which the slot die for manufacturing a secondary battery electrode performs multi-row coating in FIG. 2;
FIG. 4 is a schematic perspective view illustrating a lower die according to an embodiment of the present invention;
FIG. 5 is a schematic front view illustrating the lower die of FIG. 4;
FIG. 6 is a schematic side view illustrating the lower die of FIG. 4;
FIG. 7 is a schematic cross-sectional view illustrating the lower die of FIG. 4;
FIG. 8 is a schematic view illustrating a shim plate according to an embodiment of the present invention;
FIG. 9 is a schematic perspective view illustrating a supply part according to an embodiment of the present invention;
FIG. 10 is a schematic cross-sectional view illustrating the supply part of FIG. 9;
FIG. 11 is a schematic side view illustrating a lower die according to another embodiment of the present invention;
FIG. 12 is a schematic cross-sectional view illustrating the lower die of FIG. 11;
FIG. 13 is a schematic view illustrating a shim plate according to an embodiment of the present invention;
FIG. 14 is a schematic side view illustrating a lower die according to another embodiment of the present invention;
FIG. 15 is a schematic cross-sectional view illustrating the lower die of FIG. 14;
FIG. 16 is a schematic view illustrating a shim plate according to an embodiment of the present invention;
FIG. 17 is a schematic side view illustrating a lower die according to another embodiment of the present invention;
FIG. 18 is a schematic cross-sectional view illustrating the lower die of FIG. 17;
FIG. 19 is a schematic view illustrating a state in which a supply part is mounted on a rear surface of the lower die of FIG. 17; and
FIG. 20 is a schematic view illustrating a state in which the supply part is mounted on a bottom surface of the lower die of FIG. 17.

### DETAILED DESCRIPTION

Herein, some embodiments of the present disclosure will be described, in further detail, with reference to the accompanying drawings. The terms or words used in this specification and claims are not to be construed as being limited to the usual or dictionary meaning and are to be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure and do not necessarily represent all of the technical ideas, aspects, and features of the present disclosure. Accordingly, it is to be understood that there may be various equivalents and modifications that may replace or modify the embodiments described herein at the time of filing this application.

It is to be understood that when an element or layer is referred to as being "on," "connected to," or "coupled to" another element or layer, it may be directly on, connected, or coupled to the other element or layer, or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element, or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part, or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

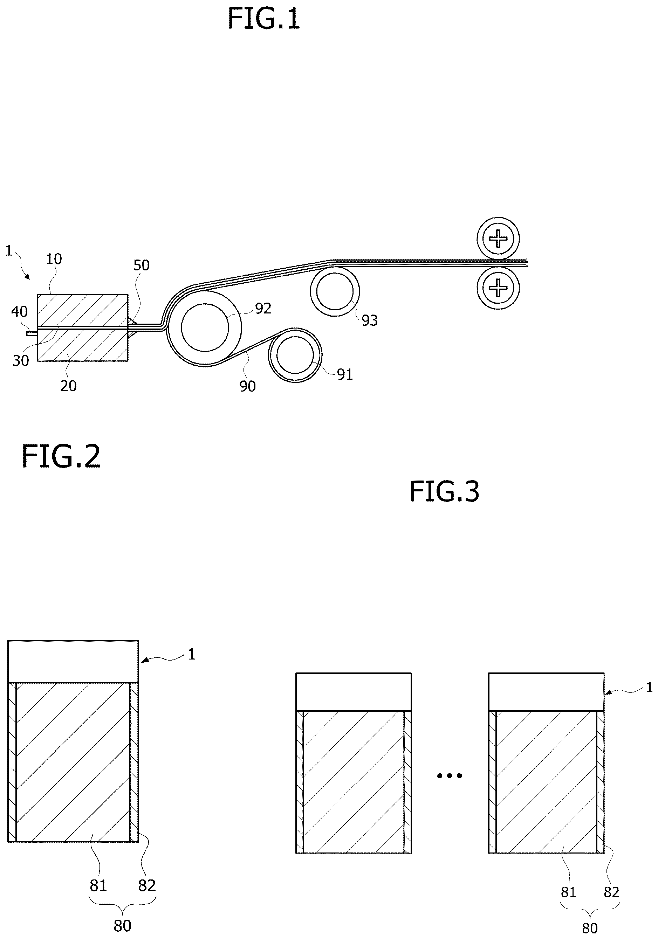

FIG. 1 is a schematic side view illustrating a slot die for manufacturing a secondary battery electrode according to an embodiment of the present invention; FIG. 2 is a schematic plan view illustrating the slot die for manufacturing a secondary battery electrode of FIG. 1; and FIG. 3 is a schematic view illustrating a state in which the slot die for manufacturing a secondary battery electrode performs multi-row coating in FIG. 2. Referring to FIGS. 1 to 3, a slot die 1 for manufacturing an electrode according to an embodiment of the present invention includes an upper die 10, a lower die 20, a shim plate 30, and a supply part 40 (in the following also referred to as supplier 40).

The upper die 10 and the lower die 20 may be vertically arranged and coupled to each other by a fastening means. The shim plate 30 may be disposed between the upper die 10 and the lower die 20. The shim plate 30 may be in contact (e.g., close contact) with a bottom surface of the upper die 10 and an upper surface of the lower die 20.

The supply part 40 may be provided in the lower die 20 and may supply a slurry 80 to a space formed in the shim plate 30. In an embodiment, the slurry 80 may include an electrode slurry 81 and an insulation coating solution 82. The supply part 40 may be disposed to be divided into a central portion and two sides of the lower die 20. The electrode slurry 81 may be supplied to the central portion of the lower die 20, and the insulation coating solution 82 may be supplied to two sides of the lower die 20.

A discharge part 50 may be formed on first side surfaces of the upper die 10 and the lower die 20. The first side surface may be a surface facing a source material 90. A space or a passage for moving the slurry 80 may be formed inside the upper die 10 and the lower die 20. A space formed in the shim plate 30 may correspond to the discharge part 50, such that the slurry 80 may be discharged through the discharge part 50.

In an embodiment, the source material 90 is supplied from a winding roller 91 on which the source material (e.g., a metal foil source material made of copper) 90 is wound, and the source material 90 is moved to a post-process while sequentially passing through a coating roller 92 and a transfer roller 93.

The slot die 1 for manufacturing an electrode may be disposed on a side of the coating roller 92. The electrode slurry 81 may be discharged through the discharge part 50 and applied on the source material 90. The insulation coating solution 82 may be discharged through the discharge part 50 and applied on the source material 90. The electrode slurry 81 may be applied on a central portion of the source material 90 to form an electrode part, and the insulation coating solution 82 may be applied on two sides of the electrode part to be an insulation part.

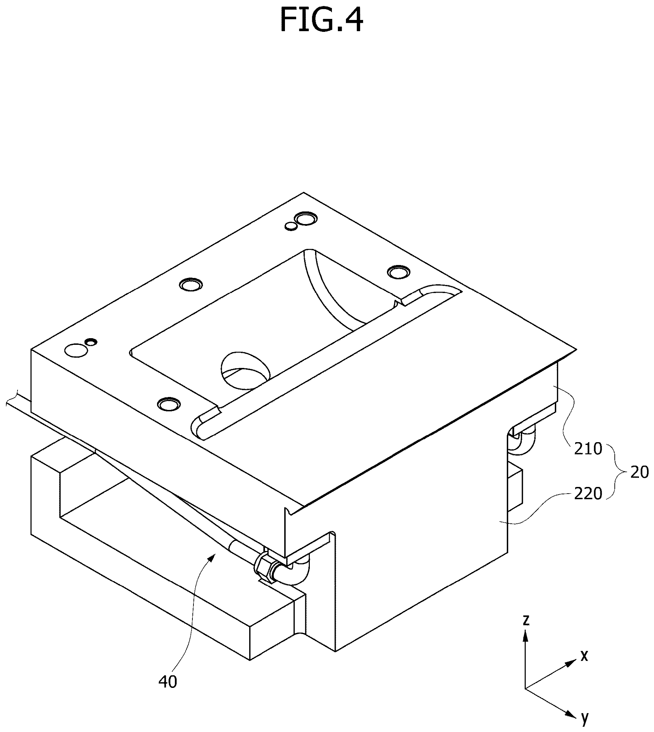

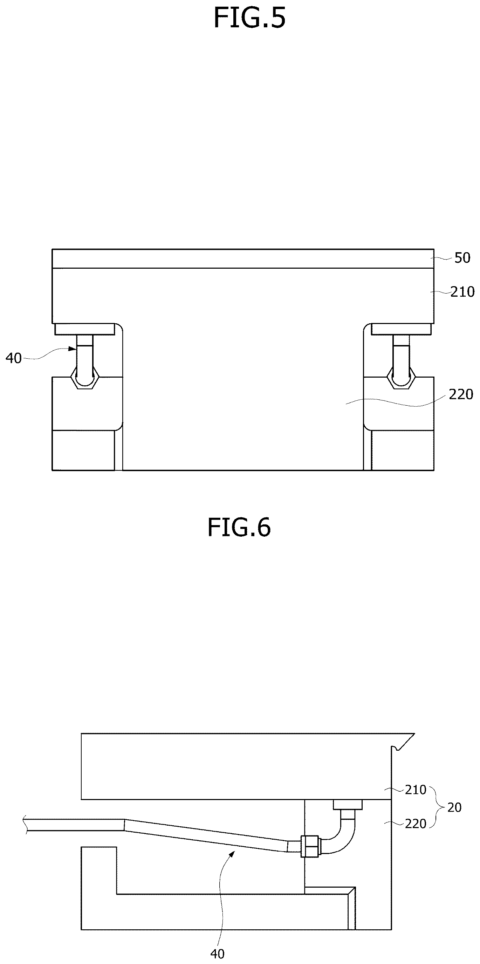

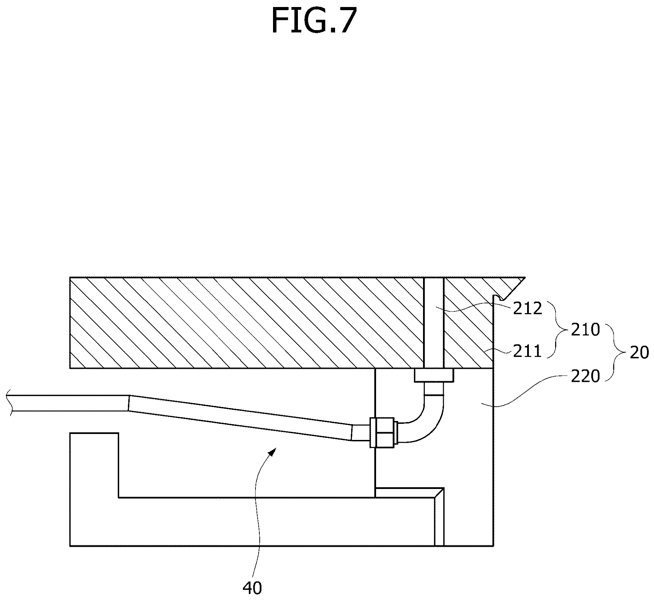

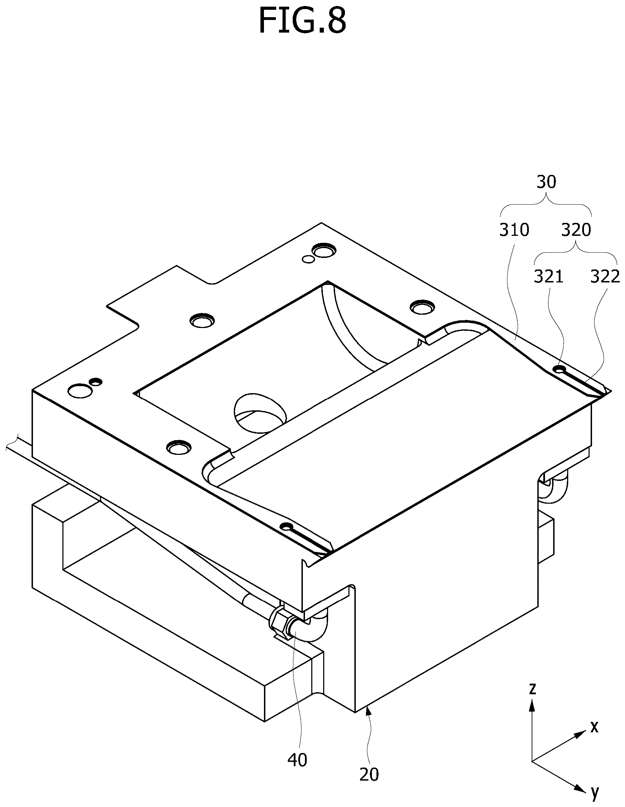

FIG. 4 is a schematic perspective view illustrating a lower die according to an embodiment of the present invention; and FIG. 5 is a schematic front view illustrating the lower die of FIG. 4. FIG. 6 is a schematic side view illustrating the lower die of FIG. 4; and FIG. 7 is a schematic cross-sectional view illustrating the lower die of FIG. 4. FIG. 8 is a schematic view illustrating a shim plate according to an embodiment of the present invention. Referring to FIGS. 4 to 8, the lower die 20 according to an embodiment of the present invention may include a lower coupling part 210 and a lower support part 220.

The shim plate 30 may be seated on an upper surface of the lower coupling part 210. The upper die 10 may be disposed on the lower coupling part 210, and the lower coupling part 210 and the upper die 10 may be coupled to each other by a fastening means.

The lower support part 220 may extend downward from the lower coupling part 210 and may be formed to have a smaller width than the lower coupling part 210. That is, the width of the lower coupling part 210 in an x-axis direction may be larger than the width of the lower support part 220 in the x-axis direction. Further, a height of the lower support part 220 in a z-axis direction may be formed larger than a height of the lower coupling part 210 in the z-axis direction.

In an embodiment, the supply part 40 may be disposed on each of two sides of the lower support part 220 and may be coupled to the lower coupling part 210. The supply part 40 may supply the insulation coating solution 82. The supply part 40 may be assembled with the lower coupling part 210 and exposed to the outside and thus may be easily cleaned or inspected later. Since the supply part 40 is disposed below the discharge part 50, leakage of the slurry 80 due to the weight thereof may be prevented or substantially prevented.

The lower coupling part 210 according to an embodiment of the present invention may include a lower coupling body 211 and a lower coupling passage 212.

The supply part 40 may be coupled to the lower coupling body 211. The lower coupling body 211 may have a plate shape having a width in the x-axis direction, and the supply part 40 may be coupled to each of two bottom surfaces thereof.

The lower coupling passage 212 may pass through the lower coupling body 211. The lower coupling passage 212 may be a passage formed by hole-processing the lower coupling body 211 in the z-axis direction.

The shim plate 30 according to an embodiment of the present invention may include a seating plate 310 and a discharge passage 320.

The seating plate 310 may be seated on the lower die 20. The seating plate 310 may be seated on an edge of the upper surface of the lower die 20. A space for supplying the electrode slurry 81 may be formed inside the edge of the upper surface of the lower die 20. The seating plate 310 may be disposed between the upper die 10 and the lower die 20 to prevent or substantially prevent leakage of the slurry and may have a partially cut shape to guide the slurry 80 toward the discharge part 50.

The discharge passage 320 may be formed in the seating plate 310 and communicate with the supply part 40 to guide the insulation coating solution 82 to the discharge part 50 such that the insulation coating solution 82 of the slurry 80 is discharged.

The discharge passage 320 may include a first discharge passage 321 and a second discharge passage 322.

The first discharge passage 321 may be formed in the seating plate 310 and may communicate with a passage formed in the lower die 20. The first discharge passage 321 may be disposed above the lower coupling passage 212. The first discharge passage 321 may be formed by hole-processing the seating plate 310 in the z-axis direction. That is, the first discharge passage 321 may have a hole shape passing through the seating plate 310 and may be disposed on a straight line with the lower coupling passage 212.

The second discharge passage 322 may have a length in a first direction from the seating plate 310 and communicate with the first discharge passage 321. The second discharge passage 322 may be processed to have a width smaller than or equal to a diameter of the first discharge passage 321. The second discharge passage 322 may have a length in a y-axis direction and may guide the insulation coating solution 82 moved to the first discharge passage 321 to the discharge part 50. The first direction may correspond to the y-axis direction.

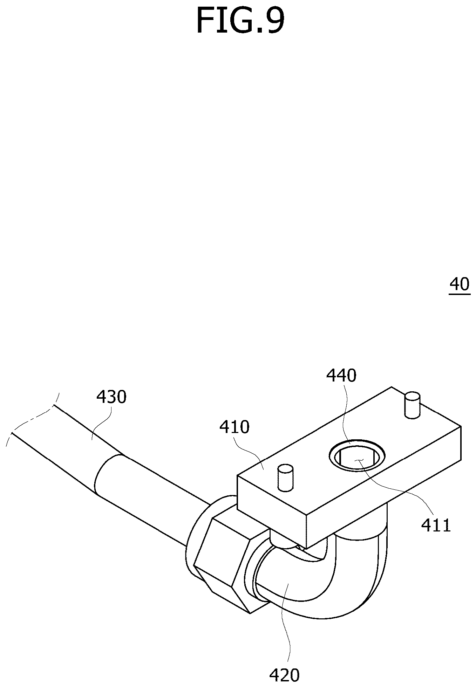

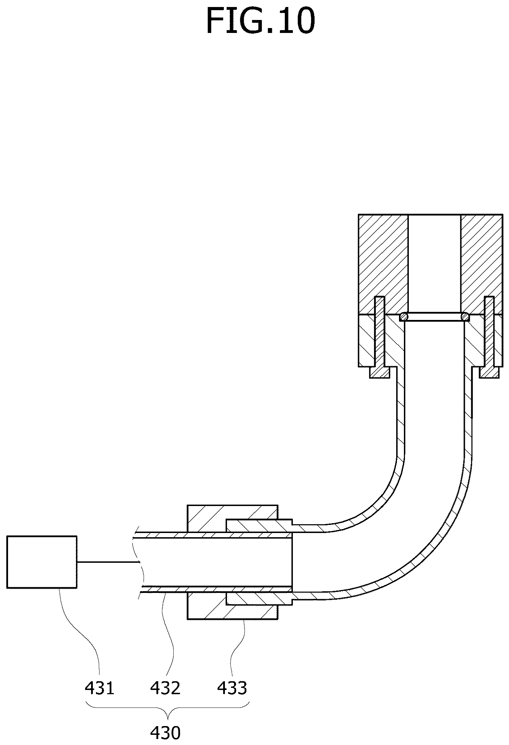

FIG. 9 is a schematic perspective view illustrating a supply part according to an embodiment of the present invention; and FIG. 10 is a schematic cross-sectional view illustrating the supply part of FIG. 9. Referring to FIGS. 9 and 10, the supply part 40 according to an embodiment of the present invention may include a supply coupling part 410, a supply extension part 420, and a supply line part 430.

The supply coupling part 410 may be coupled to the lower die 20. In an embodiment, the supply coupling part 410 may be in contact (e.g., close contact) with each of two sides of the lower coupling part 210 and may be coupled to the lower coupling part 210 by a fastening means, such as a bolt. In an embodiment, the supply coupling part 410 may have a rectangular plate shape. A supply coupling hole 411 may be formed in a central portion of the supply coupling part 410.

In an embodiment, the supply extension part 420 may extend in an elbow shape from the supply coupling part 410. In an embodiment, the supply extension part 420 may be formed integrally with the supply coupling part 410. The supply extension part 420 may have a pipe shape and have an inner diameter corresponding to the supply coupling hole 411. In an embodiment, a thread may be formed on an outer circumferential surface of an end portion of the supply extension part 420.

The supply line part 430 may be connected to the supply extension part 420 and may supply the slurry 80. The supply line part 430 may include a line storage portion 431, a line hose portion 432, and a line connection portion 433.

The line storage portion 431 may store the insulation coating solution 82 in the slurry 80. In an embodiment, a pump may be provided in the line storage portion 431 to forcibly pump the insulation coating solution 82. The line storage portion 431 may be mounted on the upper die 10 to guide the insulation coating solution 82 to be moved by the weight thereof. In an embodiment, the line storage portion 431 may be coupled to the lower die 20 lower than the discharge part 50.

The line hose portion 432 may be connected to the line storage portion 431 to guide the slurry 80. The line hose portion 432 may be disposed below the lower coupling part 210 in the y-axis direction. The line hose portion 432 may be made of a soft material that may be deformed. The line hose portion 432 may be exposed to the outside such that an operator may visually check a condition thereof.

The line connection portion 433 may be provided in the line hose portion 432 and coupled to the supply extension part 420. The line connection portion 433 may be connected to an end portion of the line hose portion 432 and, in an embodiment, may be screw-coupled to an outer circumferential surface of the supply extension part 420. The line connection portion 433 and the supply extension part 420 may be exposed to the outside such that the operator may visually check conditions thereof.

The supply part 40 according to an embodiment of the present invention may further include a supply sealing part 440. The supply sealing part 440 may be provided in the supply coupling part 410 and may be in close contact with the lower coupling part 210. In an embodiment, the supply sealing part 440 may be an O-ring formed of an elastic material. The supply sealing part 440 may be disposed along a circumference of the supply coupling hole 411. A groove in which the supply sealing part 440 is to be seated may be formed in the supply coupling part 410.

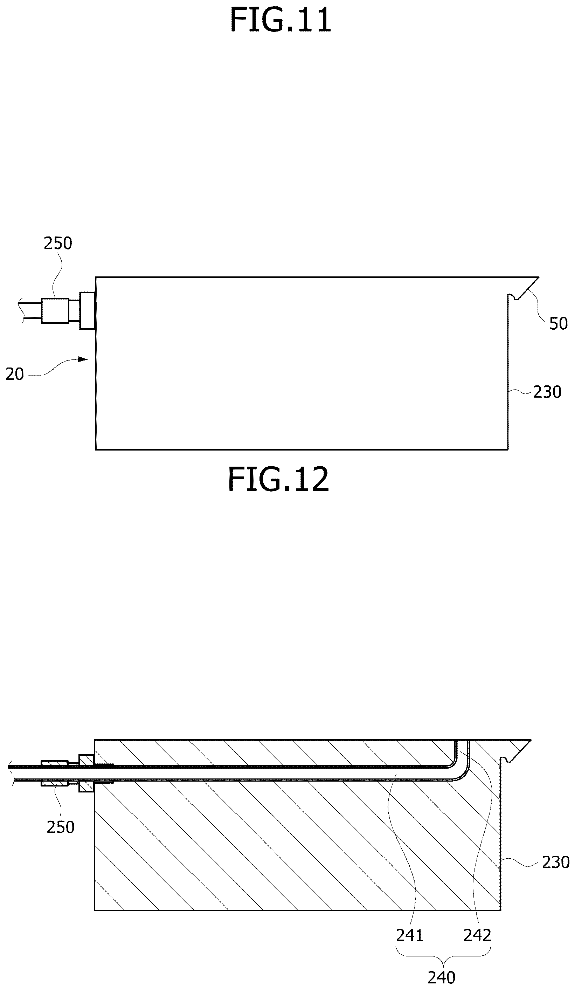

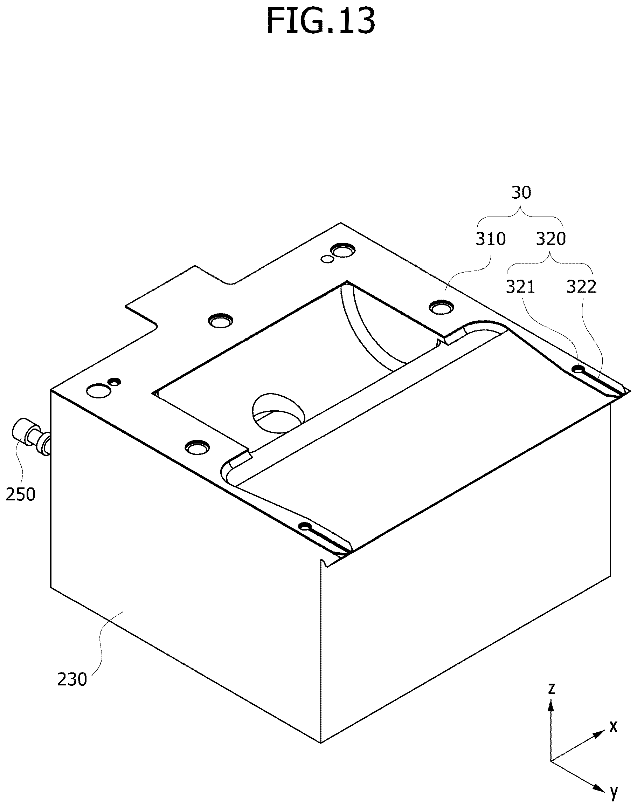

FIG. 11 is a schematic side view illustrating a lower die according to another embodiment of the present invention; FIG. 12 is a schematic cross-sectional view illustrating the lower die of FIG. 11; and FIG. 13 is a schematic view illustrating a shim plate according to an embodiment of the present invention. Referring to FIGS. 11 to 13, the lower die 20 according to the present embodiment of the present invention may include a lower body 230, a lower passage 240, and a lower providing part 250.

The shim plate 30 may be seated on an upper surface of the lower body 230. The upper die 10 may be disposed on the lower body 230, and the lower body 230 and the upper die 10 may be coupled to each other by a fastening means.

The lower passage 240 may be formed in the lower body 230 and may guide the slurry 80. In an embodiment, the lower passage 240 may be formed through hole-processing in the lower body 230.

The lower providing part 250 may be mounted on the lower body 230 and may provide the slurry 80 to the lower passage 240. The lower providing part 250 may include a tank in which the insulation coating solution 82 is stored, a hose for guiding the insulation coating solution 82 stored in the tank, and a connector formed in the hose, mounted on the lower body 230, and connected to the lower passage 240.

The lower passage 240 may include a first passage 241 and a second passage 242.

The first passage 241 may be hole-processed in the lower body 230 in the first direction. The lower body 230 may be hole-processed in the y-axis direction to form the first passage 241. The first passage 241 may be formed by hole-processing to approach a front surface from a rear surface of the lower body 230. The lower providing part 250 may be assembled with the rear surface of the lower body 230 and connected to the first passage 241.

The second passage 242 may communicate with the first passage 241, may be hole-processed in a second direction, and may guide the slurry 80 to the shim plate 30. The second passage 242 may be processed in the z-axis direction on the upper surface of the lower body 230 and connected to the first passage 241. The second direction may correspond to the z-axis direction.

The shim plate 30 may include the seating plate 310 and the discharge passage 320.

The seating plate 310 may be seated on the lower die 20. The seating plate 310 may be seated on an edge of the upper surface of the lower die 20. A space for supplying the electrode slurry 81 may be formed inside the edge of the upper surface of the lower die 20. The seating plate 310 may be disposed between the upper die 10 and the lower die 20 to prevent or substantially prevent leakage of the slurry and may have a partially cut shape to guide the slurry 80 toward the discharge part 50.

The discharge passage 320 may be formed in the seating plate 310 and communicate with the supply part 40 to guide the insulation coating solution 82 to the discharge part 50 such that the insulation coating solution 82 of the slurry 80 is discharged.

The discharge passage 320 may include the first discharge passage 321 and the second discharge passage 322.

The first discharge passage 321 may be formed in the seating plate 310 and may communicate with the passage formed in the lower die 20. The first discharge passage 321 may be disposed above the second passage 242. The first discharge passage 321 may be formed by hole-processing the seating plate 310 in the z-axis direction. That is, the first discharge passage 321 may have a hole shape passing through the seating plate 310 and may be disposed on a straight line with the second passage 242.

The second discharge passage 322 may have a length in the first direction from the seating plate 310 and communicate with the first discharge passage 321. The second discharge passage 322 may be processed to have a width smaller than or equal to the diameter of the first discharge passage 321. The second discharge passage 322 may have the length in a y-axis direction and may guide the insulation coating solution 82 moved to the first discharge passage 321 to the discharge part 50.

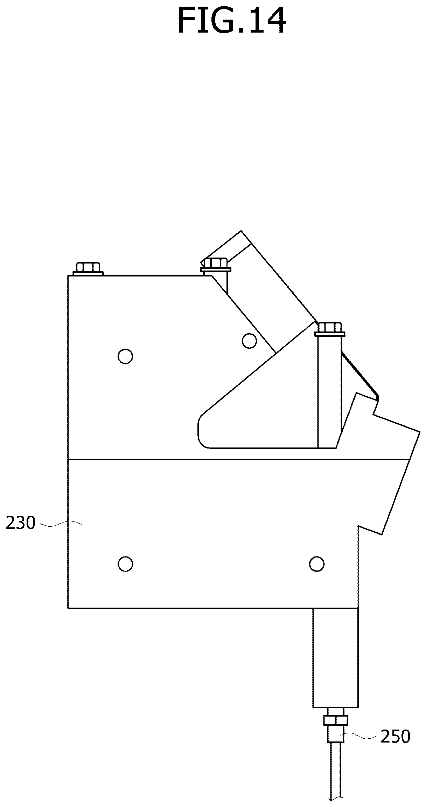

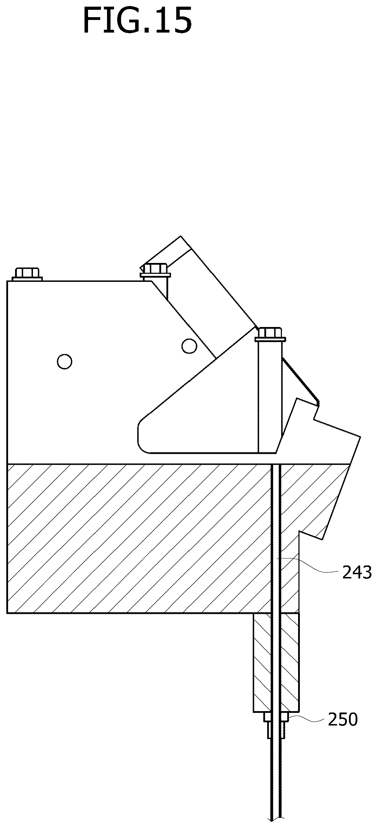

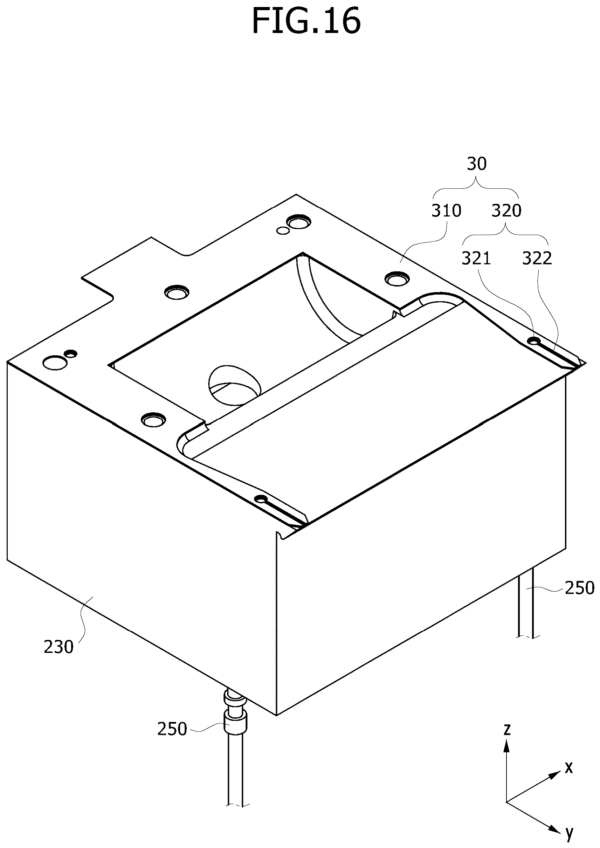

FIG. 14 is a schematic side view illustrating a lower die according to another embodiment of the present invention; FIG. 15 is a schematic cross-sectional view illustrating the lower die of FIG. 14; and FIG. 16 is a schematic view illustrating a shim plate according to an embodiment of the present invention. Referring to FIGS. 14 to 16, the lower die 20 according to the present embodiment of the present invention may include the lower body 230, the lower passage 240, and the lower providing part 250.

The shim plate 30 may be seated on the upper surface of the lower body 230. The upper die 10 may be disposed on the lower body 230, and the lower body 230 and the upper die 10 may be coupled to each other by a fastening means.

The lower passage 240 may be formed in the lower body 230 and may guide the slurry 80. In an embodiment, the lower passage 240 may be formed through hole-processing in the lower body 230.

The lower providing part 250 may be mounted on the lower body 230 and may provide the slurry 80 to the lower passage 240. The lower providing part 250 may include the tank in which the insulation coating solution 82 is stored, the hose for guiding the insulation coating solution 82 stored in the tank, and the connector formed in the hose, mounted on the lower body 230, and connected to the lower passage 240.

The lower passage 240 may include a third passage 243. The third passage 243 may be formed by hole-processing the lower body 230 in the second direction to guide the slurry 80 to the shim plate 30. The third passage 243 may be a hole passing through the lower body 230 in the z-axis direction. An upper end of the third passage 243 may be exposed through the upper surface of the lower body 230, and a lower end of the third passage 243 may be exposed through the lower surface of the lower body 230. The lower providing part 250 may be assembled with a bottom surface of the lower body 230.

The shim plate 30 may include the seating plate 310 and the discharge passage 320.

The seating plate 310 may be seated on the lower die 20. The seating plate 310 may be seated on an edge of the upper surface of the lower die 20. A space for supplying the electrode slurry 81 may be formed inside the edge of the upper surface of the lower die 20. The seating plate 310 may be disposed between the upper die 10 and the lower die 20 to prevent or substantially prevent leakage of the slurry and may have a partially cut shape to guide the slurry 80 toward the discharge part 50.

The discharge passage 320 may be formed in the seating plate 310 and communicate with the supply part 40 to guide the insulation coating solution 82 to the discharge part 50 such that the insulation coating solution 82 of the slurry 80 is discharged.

The discharge passage 320 may include the first discharge passage 321 and the second discharge passage 322.

The first discharge passage 321 may be formed in the seating plate 310 and may communicate with the passage formed in the lower die 20. The first discharge passage 321 may be disposed above the third passage 243. The first discharge passage 321 may be formed by hole-processing the seating plate 310 in the z-axis direction. That is, the first discharge passage 321 may have the hole shape passing through the seating plate 310 and may be disposed on a straight line with the third passage 243.

The second discharge passage 322 may have a length in the first direction from the seating plate 310 and communicate with the first discharge passage 321. The second discharge passage 322 may be processed to have a width smaller than or equal to the diameter of the first discharge passage 321. The second discharge passage 322 may have the length in a y-axis direction and may guide the insulation coating solution 82 moved to the first discharge passage 321 to the discharge part 50.

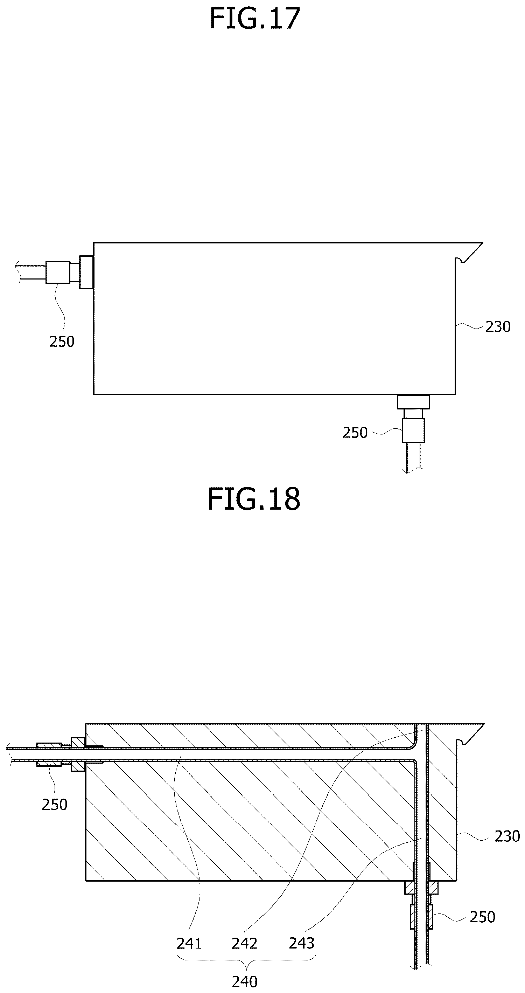

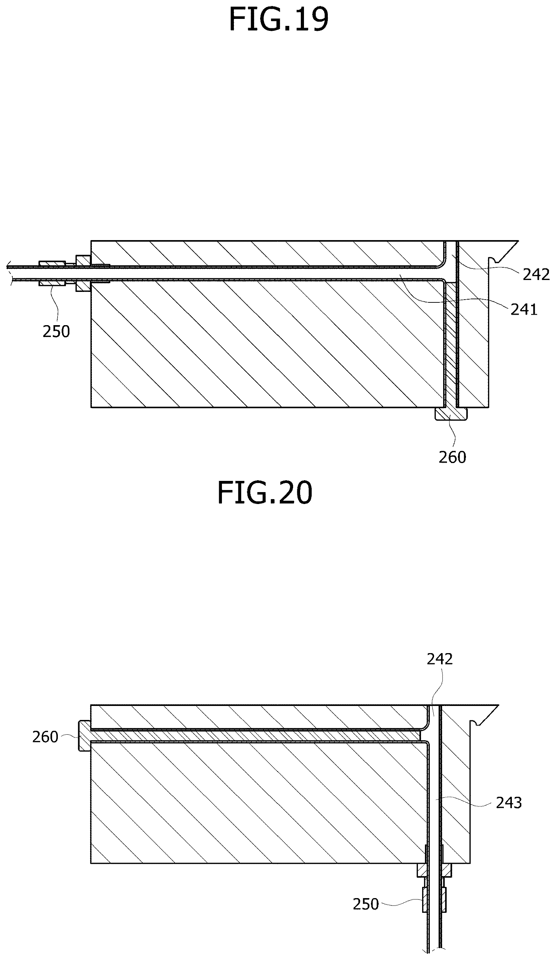

FIG. 17 is a schematic side view illustrating a lower die according to another embodiment of the present invention; and FIG. 18 is a schematic cross-sectional view illustrating the lower die of FIG. 17. FIG. 19 is a schematic view illustrating a state in which a supply part is mounted on a rear surface of the lower die of FIG. 17; and FIG. 20 is a schematic view illustrating a state in which the supply part is mounted on a bottom surface of the lower die of FIG. 17. Referring to FIGS. 17 to 20, the lower die 20 according to the present embodiment of the present invention may include the lower body 230, the lower passage 240, and the lower providing part 250.

The shim plate 30 may be seated on the upper surface of the lower body 230. The upper die 10 may be disposed on the lower body 230, and the lower body 230 and the upper die 10 may be coupled to each other by a fastening means.

The lower passage 240 may be formed in the lower body 230 and may guide the slurry 80. The lower passage 240 may be formed through hole-processing in the lower body 230.

The lower providing part 250 may be mounted on the lower body 230 and may provide the slurry 80 to the lower passage 240. The lower providing part 250 may include a tank in which the insulation coating solution 82 is stored, a hose for guiding the insulation coating solution 82 stored in the tank, and a connector formed in the hose, mounted on the lower body 230, and connected to the lower passage 240.

The lower passage 240 may include the first passage 241, the second passage 242, and the third passage 243.

The first passage 241 may be formed by hole-processing in the lower body 230 in the first direction. The first passage 241 may be processed in the y-axis direction. The first passage 241 may be formed by hole-processing to approach a front surface from a rear surface of the lower body 230. The lower providing part 250 may be assembled with the rear surface of the lower body 230 and connected to the first passage 241.

The second passage 242 may communicate with the first passage 241, may be hole-processed in the second direction, and may guide the slurry 80 to the shim plate 30. The second passage 242 may be processed in the z-axis direction from the upper surface of the lower body 230 and connected to the first passage 241.

The third passage 243 may be formed by hole-processing the lower body 230 in the second direction to guide the slurry 80 to the shim plate 30. The third passage 243 may process a hole on the bottom surface of the lower body 230 in the z-axis direction. An upper end of the third passage 243 may communicate with the second passage 242. The second passage 242 and the third passage 243 may be arranged on a straight line. The lower end of the third passage 243 may be exposed through the bottom surface of the lower body 230. The lower providing part 250 may be assembled with the bottom surface of the lower body 230.

In an embodiment, the shim plate 30 corresponds to the shim plate 30 illustrated in FIGS. 13 and 16, and a further detailed description thereof will be omitted.

The lower die 20 according to the present embodiment of the present invention may change a supply direction of the insulation coating solution 82 according to a working environment.

If the insulation coating solution 82 is supplied from the rear side of the lower body 230, the lower providing part 250 is mounted on the rear surface of the lower body 230, and a lower blocking part 260 is mounted on the bottom surface of the lower body 230. The lower blocking part 260 is inserted into the third passage 243 to close the third passage 243. Accordingly, the insulation coating solution 82 passes through the first passage 241 and the second passage 242, then passes through the discharge passage 320 formed in the shim plate 30, and is discharged to the discharge part 50 (see FIG. 19).

If the insulation coating solution 82 is supplied from the lower side of the lower body 230, the lower providing part 250 is mounted on the bottom surface of the lower body 230, and the lower blocking part 260 is mounted on the rear surface of the lower body 230. The lower blocking part 260 is inserted into the first passage 241 to close the first passage 241. Accordingly, the insulation coating solution 82 passes through the third passage 243 and the second passage 242, then passes through the discharge passage 320 formed in the shim plate 30, and is discharged to the discharge part 50 (see FIG. 20).

In the slot die 1 for manufacturing a secondary battery electrode according to one or more embodiments of the present invention, the shim plate 30 may be disposed between the upper die 10 and the lower die 20, and the slurry 80 supplied from the lower die 20 may be discharged through the shim plate 30. Accordingly, the slurry 80 stored in the passage formed in the lower die 20 can be prevented or substantially prevented from leaking due to the weight thereof.

In the slot die 1 for manufacturing a secondary battery electrode according to one or more embodiments of the present invention, the supply part coupled to each of two sides of the bottom surface of the lower coupling part 210 is exposed to the outside, and the operator can visually check a slurry supply state.

In the slot die 1 for manufacturing a secondary battery electrode according to one or more embodiments of the present invention, the lower providing part 250 may be mounted on the rear surface and the bottom surface of the lower body 230, and the mounting position of the lower providing part 250 may be changed according to a working environment.

In a slot die for manufacturing a secondary battery electrode according to one or more embodiments of the present invention, a shim plate can be disposed between an upper die and a lower die, and a slurry supplied from the lower die can be discharged through the shim plate. Therefore, the slurry stored in a passage formed in the lower die can be prevented or substantially prevented from leaking due to the weight thereof.

In a slot die for manufacturing a secondary battery electrode according to one or more embodiments of the present invention, a supply part coupled to each of two sides of a bottom surface of a lower coupling part is exposed to the outside, and an operator can visually check a slurry supply state.

In a slot die for manufacturing a secondary battery electrode according to one or more embodiments of the present invention, a lower providing part can be mounted on a rear surface and a bottom surface of a lower body, and a mounting position of the lower providing part can be changed according to a working environment.

However, the effects obtainable through the present disclosure are not limited to the above effects, and other technical effects that are not mentioned will be clearly understood by those skilled in the art from the following description of the present disclosure.

While the present disclosure has been described with reference to some example embodiments shown in the drawings, these embodiments are merely illustrative and it is to be understood that various modifications and equivalent other embodiments can be derived by those skilled in the art on the basis of the embodiments. Therefore, the technical scope of the present disclosure is to be defined by the claims.

## Claims

1. A slot die (1) for manufacturing a secondary battery electrode, the slot die (1) comprising:
an upper die (10);
a lower die (20) below the upper die (10);
a shim plate (30) between the upper die (10) and the lower die (20); and
a supplier (40) in the lower die (20) and configured to supply a slurry (80) to a space defined in the shim plate (30).

2. The slot die (1) as claimed in claim 1, wherein the lower die (20) comprises:
a lower coupling part (210) on which the shim plate (30) is seated and which is coupled to the upper die (10); and
a lower support part (220) extending downward from the lower coupling part (210) and having a smaller width than the lower coupling part (210), and
the supplier (40) coupled to the lower coupling part (210) is arranged on each of two sides of the lower support part (220).

3. The slot die (1) as claimed in claim 2, wherein the lower coupling part (210) comprises:
a lower coupling body (211) to which the supplier (40) is coupled; and
a lower coupling passage (212) passing through the lower coupling body (211).

4. The slot die (1) as claimed in any one of claims 1 to 3, wherein the shim plate (30) comprises:
a seating plate (310) seated on the lower die (20); and
a discharge passage (320) located in the seating plate (310) and communicating with the supplier (40) to discharge the slurry (80).

5. The slot die (1) as claimed in claim 4, wherein the discharge passage (320) comprises:
a first discharge passage (321) in the seating plate (310) and communicating with a passage formed in the lower die (20); and
a second discharge passage (322) having a length in a first direction (y) in the seating plate (310) and communicating with the first discharge passage (321).

6. The slot die (1) as claimed in any one of claims 1 to 5, wherein the supplier (40) comprises:
a supply coupling part (410) coupled to the lower die (20);
a supply extension part (420) extending in an elbow shape from the supply coupling part (410); and
a supply line part (430) connected to the supply extension part (420) and configured to supply the slurry (80).

7. The slot die (1) as claimed in claim 6, wherein the supply line part (430) comprises:
a line storage portion (431) configured to store the slurry (80);
a line hose portion (432) that is connected to the line storage portion (431) and configured to guide the slurry (80); and
a line connection portion (433) in the line hose portion (432) and coupled to the supply extension part (420).

8. The slot die (1) as claimed in claim 7, wherein the line hose portion (432) comprises a soft material that is deformable.

9. The slot die (1) as claimed in any one of claims 6 to 8, as far as depending on claim 2, wherein the supplier (40) further comprises a supply sealing part (440) arranged in the supply coupling part (410) and in contact with the lower coupling part (210).

10. The slot die (1) as claimed in any one of claims 1 to 9, wherein the lower die (20) comprises:
a lower body (230) on which the shim plate (30) is seated and which is coupled to the upper die (10);
a lower passage (240) in the lower body (230) to guide the slurry (80); and
a lower providing part (250) mounted on the lower body (230) and configured to provide the slurry (80) to the lower passage (240).

11. The slot die (1) as claimed in claim 10, wherein the lower passage (240) comprises:
a first passage (241) hole-processed in the lower body (230) in a first direction (y); and
a second passage (242) that communicates with the first passage (241), is hole-processed in a second direction (z), and configured to guide the slurry (80) to the shim plate (30).

12. The slot die (1) as claimed in claim 11, wherein the first passage (241) is exposed through a rear surface of the lower body (230), and the lower providing part (250) is assembled with the rear surface of the lower body (230).

13. The slot die (1) as claimed in any one of claims 10 to 12, as far as depending on claim 4, wherein the discharge passage (320) that is located in the seating plate (310) communicates with the lower passage (240) and is configured to discharge the slurry (80).

14. The slot die (1) as claimed in any one of claims 10 to 13, wherein the lower passage (240) comprises a third passage (243) hole-processed in the lower body (230) in a second direction (z) and configured to guide the slurry (80) to the shim plate (30).

15. The slot die (1) as claimed in claim 14, wherein the third passage (243) is exposed through a bottom surface of the lower body (230), and/or
the lower providing part (250) is assembled with the bottom surface of the lower body (230).
